# EUROPÄISCHE PATENTSCHRIFT

(11) **EP 3 073 545 B1**
(45) Veröffentlichungstag und Bekanntmachung des Hinweises auf die Patenterteilung: **22.11.2017**
(21) Anmeldenummer: 16157338.1
(22) Anmeldetag: 25.02.2016
(51) Int. Cl.: H01M 2/10, H01M 10/04, H01M 10/625, H01M 10/647, H01M 10/6556, H01M 10/613

(54) **VORRICHTUNG UND VERFAHREN ZUM VERSPANNEN EINES BATTERIEMODULS SOWIE BATTERIESYSTEM UND FAHRZEUG**
DEVICE AND METHOD FOR CLAMPING A BATTERY MODULE AND BATTERY SYSTEM AND VEHICLE
DISPOSITIF ET PROCEDE DE SERRAGE D'UN MODULE DE BATTERIE ET SYSTEME DE BATTERIE ET VEHICULE

(30) Priorität: 23.03.2015 DE 102015205219
(43) Veröffentlichungstag der Anmeldung: 28.09.2016
(73) Patentinhaber: ROBERT BOSCH GMBH, 70442 Stuttgart (DE)
(72) Erfinder: Gerlach, Martin, 96129 Strullendorf (DE); Poller, Silvan, 02829 Neisseaue Ot Kaltwasser (DE); Schubert, Gerhard, 96129 Strullendorf (DE); Reinshagen, Holger, 96052 Bamberg (DE); Austen, Michael, 96050 Bamberg (DE)

(56) Entgegenhaltungen:
- EP-A1- 2 669 917
- DE-A1-102011 003 535
- DE-A1-102012 217 367
- US-A1- 2007 042 263
- US-A1- 2011 293 974

## Beschreibung

### Stand der Technik

Sowohl bei stationären Anwendungen, zum Beispiel bei Windkraftanlagen, als auch bei mobilen Anwendungen, zum Beispiel bei Elektrokraftfahrzeugen (electric vehicles, EV), Hybridfahrzeugen (hybrid electric vehicles, HEV) oder Steckdosenhybridfahrzeugen (plug-in hybrid electric vehicles, PHEV), kommen als wieder aufladbare elektrische Energiespeicher (EES, electro-chemical storage system, ESS) vermehrt neue Batteriesysteme bzw. Batteriemodule, zum Beispiel mit Lithium-Ionen-Akkumulatoren, zum Einsatz.

Ein Batteriesystem (Akkumulatorsystem) umfasst eine Vielzahl von Batteriezellen (Akkumulatorzellen) beispielsweise zylindrische oder prismatische Batteriezellen oder Batteriezellen mit Elektrodenwickel (Batteriezellwickel, Zellwickel, Jerry Roll, JR). Die Batteriezellen können seriell (in Reihe) verschaltet werden, um die elektrische Spannung zu erhöhen, und / oder parallel verschaltet werden, um den maximalen elektrischen Strom und die Kapazität zu erhöhen. Somit können die Batteriezellen zu Batteriemodulen bzw. Batterieeinheiten (Batteriepacks) zusammengefasst werden. Beim Einsatz zum Antrieb von Fahrzeugen können beispielsweise ca. 100 Batteriezellen (als eine Traktionsbatterie) seriell bzw. parallel verschaltet werden.

Die Batteriezellen sind üblicherweise zu Batteriemodulen zusammengefasst. Dafür ist eine Verspannung der Batteriezellen nötig, sodass die Batteriezellen stabil bleiben. Außerdem um die Langlebigkeit der Batteriezellen zu gewährleisten, ist es erforderlich dass die Batteriezellen nicht zu heiß werden. Dazu wird üblicherweise ein Gehäuse des Batteriemoduls mit einem Kühler ausgestattet, welcher die optimale Batterietemperatur hält.
Aus DE 10 2011 003 535 A1 ist ein Batteriemodul mit einem Kühler bekannt, der zumindest eine Wärmeübergangsfläche zum Übertragen von Wärmeenergie aufweist, und wobei das Energiespeichermodul zumindest eine Anlagefläche zum Anlegen der Wärmeübergangsfläche sowie zumindest zwei Modulträger aufweist, die an zwei einander gegenüberliegenden Seiten des Energiespeichermoduls angeordnet sind.
Die Vorrichtung weist ein Spannblech mit zumindest zwei an gegenüberliegenden Enden des Spannblechs angeordneten Verbindungselementen zum Verbinden des Spannblechs mit den Modulträgern auf, wobei das Spannblech ausgebildet ist, um den Kühler teilumfänglich zu umschließen und eine Verspannkraft auf zumindest Teilbereiche einer von der Wärmeübergangsfläche abgewandten Seite des Kühlers auszuüben, wenn das Spannblech mit den Modulträgern verbunden ist. Weitere Batteriemodule mit Spannplatten, einer Kühlvorrichtung und einer Verspanneinrichtung sind auch aus den Druckschriften DE 10 2012 217 367 A1, EP 2 669 917 A1 und US 2011/0293974 A1 bekannt. Es ist eine Aufgabe der vorliegenden Erfindung, eine verbesserte Vorrichtung und ein verbessertes Verfahren zum Verspannen eines Batteriemoduls, bei dem die Batteriezellen stabil verspannt bleiben und die Temperatur der Batteriezellen kontrolliert werden kann, bereitzustellen.

### Offenbarung der Erfindung

Die erfindungsgemäßen Vorrichtungen und Verfahren mit den Merkmalen der unabhängigen Ansprüche haben den Vorteil, dass Batteriezellen kostengünstig zu einem Batteriemodul stabil montiert und effektiv gekühlt werden können. Vorteilhafte Ausführungsformen der vorliegenden Erfindung sind in den abhängigen Ansprüchen beschrieben.

Zweckmäßigerweise kann die Vorrichtung weiterhin eine zweite Spannplatte umfassen, wobei die Verspanneinrichtung weiter derart konfiguriert sein kann, die Batteriezellen zwischen der ersten Spannplatte und der zweiten Spannplatte zu verspannen. Dadurch ist es möglich, mehr als eine Seite der Batteriezellen zu kühlen.

Zweckmäßigerweise können die erste Spannplatte und die zweite Spannplatte derart konfiguriert sein, einen Teil eines Gehäuses des Batteriemoduls zu bilden. Dadurch ist es möglich, auf ein Gehäuse zu verzichten.

Zweckmäßigerweise kann der Kühler als ein Hohlprofil verwirklicht bzw. implementiert sein. Dadurch ist es möglich, ein Kühlmittel, zum Beispiel Wasser, Öl oder Luft, durch einen Hohlraum oder mehrere Hohlräume des Hohlprofils durchfließen zu lassen.

Zweckmäßigerweise kann die Verspanneinrichtung als ein Klebeband oder mehrere Klebebänder und / oder eine Schraube oder mehreren Schrauben und / oder eine Verschweißung oder mehrere Verschweißungen verwirklicht bzw. implementiert sein. Dadurch ist es möglich, eine einfache und / oder dauerhafte Verspannung zu erhalten.

Die Erfindung stellt weiterhin ein Batteriesystem bereit, das ein Batteriemodul und die zuvor beschriebene Vorrichtung umfasst.

Die Erfindung stellt weiterhin ein Fahrzeug, insbesondere Kraftfahrzeug wie Elektrokraftfahrzeug, Hybridfahrzeug, Plug-In Hybridfahrzeug oder Elektromotorrad (Elektro-Bike, E-Bike), Elektrofahrrad (Pedal Electric Cycle, Pedelec), ein Seefahrzeug wie Elektroboot oder Unterseeboot (U-Boot), ein Luftfahrzeug oder ein Raumfahrzeug, bereit, das das zuvor beschriebene und mit dem Fahrzeug verbundene Batteriesystem umfasst.

Die Erfindung stellt weiterhin ein Verfahren zum Verspannen eines Batteriemoduls bereit, wobei das Batteriemodul eine Vielzahl von Batteriezellen umfasst, gekennzeichnet durch Positionieren der Batteriezellen mit einer ersten Spannplatte, Einführen eines Kühlers zwischen der ersten Spannplatte und den Batteriezellen, und Verspannen der ersten Spannplatte und der Batteriezellen gegeneinander mit einer Verspanneinrichtung. Dadurch ist es möglich, mit einem einzigen Verfahren die Batteriezellen zu verspannen und zu kühlen.

Die Erfindung stellt weiterhin ein Verfahren zum Verspannen eines Batteriemoduls bereit, wobei das Batteriemodul eine Vielzahl von Batteriezellen umfasst, gekennzeichnet durch Positionieren der Batteriezellen mit einer ersten Spannplatte, und Verspannen der ersten Spannplatte und der Batteriezellen gegeneinander mit einer Verspanneinrichtung, wobei die erste Spannplatte einen Kühler (300) umfasst. Dadurch ist es möglich, mittels des Kühlers die Batteriezellen zu verspannen und zu kühlen.

Zweckmäßigerweise kann der Kühler durch ein Streckblas-Verfahren hergestellt werden. Dadurch ist es möglich, den Kühler zwischen den Batteriezellen und der Spannplatte zu erhalten, wobei sich der Kühler an die Grenzen verschiedenen Batteriezellen genau anpasst.

Ausführungsbeispiele der Erfindung sind in der Zeichnung dargestellt und in der nachfolgenden Beschreibung näher erläutert.
Figur 1 zeigt eine schematische dreidimensionale Darstellung mehrerer Batteriezellen,
Figur 2 zeigt eine schematische dreidimensionale Darstellung mehrerer Batteriezellen mit einer Spannplatte,
Figur 3 zeigt eine schematische dreidimensionale Darstellung mehrerer Batteriezellen mit zwei Spannplatten,
Figur 4 zeigt eine schematische dreidimensionale Darstellung mehrerer Batteriezellen mit zwei Spannplatten und zwei Kontaktplatten,
Figur 5 zeigt eine schematische dreidimensionale Darstellung einer Vorrichtung 200 zum Verspannen eines Batteriemoduls gemäß einer Ausführungsform der Erfindung,
Figur 6 zeigt eine schematische dreidimensionale Darstellung eines Kühlers, und
Figuren 7A-7E zeigen eine schematische zweidimensionale Darstellung eines Verfahrens zum Herstellen eines Teiles eines Kühlers.

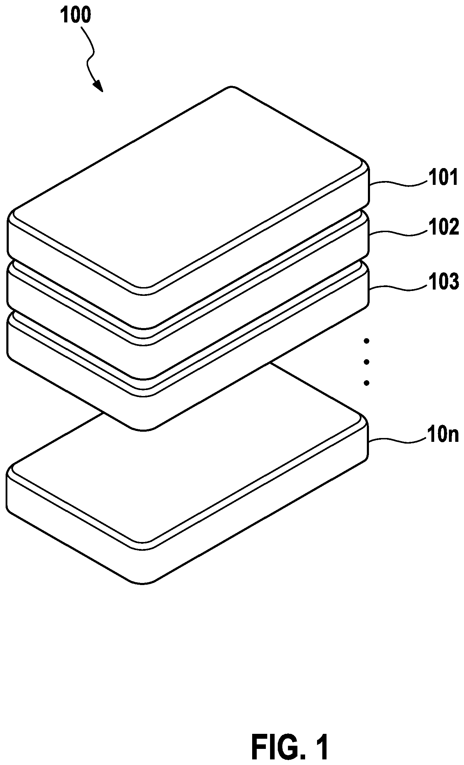

Figur 1 zeigt eine schematische dreidimensionale Darstellung mehrerer Batteriezellen 101, 102, 103, ... 10n. Die Batteriezellen 101, 102, 103, ... 10n bilden ein Batteriemodul 100. Die Batteriezellen 101, 102, 103, ... 10n können nebeneinander, hintereinander oder übereinander angeordnet werden bzw. sein. Außerdem können die Batteriezellen 101, 102, 103, ... 10n seriell (in Reihe) und / oder parallel miteinander elektrisch verschaltet sein, zum Beispiel mittels einer Verbindung oder mehrerer Verbindungen wie Zellverbindern oder Kabeln (In Figur 1 nicht dargestellt).

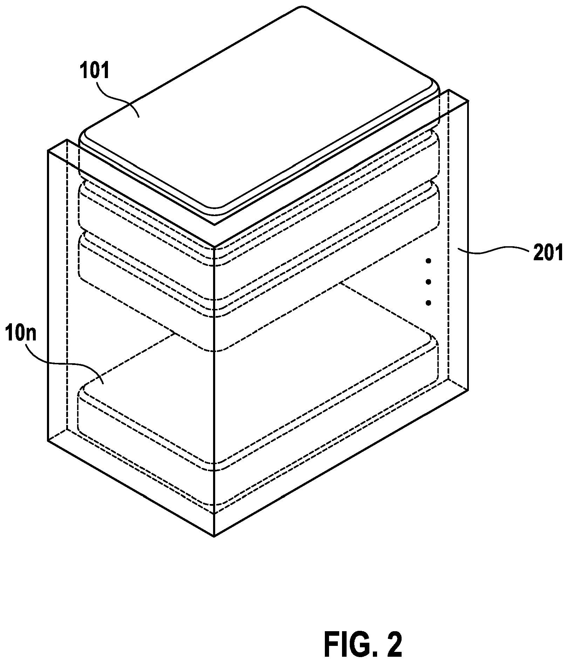

Figur 2 zeigt eine schematische dreidimensionale Darstellung mehrerer Batteriezellen mit einer Spannplatte. Um die Batteriezellen 101, 102, 103 ... 10n zu positionieren, kann eine Spannplatte 201, wie in Figur 2 dargestellt, benutzt werden. Die Spannplatte 201 ist mit einem L-Profil dargestellt. Das Profil kann beispielsweise aus Kunststoff oder isoliertem beispielsweise beschichtetem oder lackiertem Metall hergestellt werden.

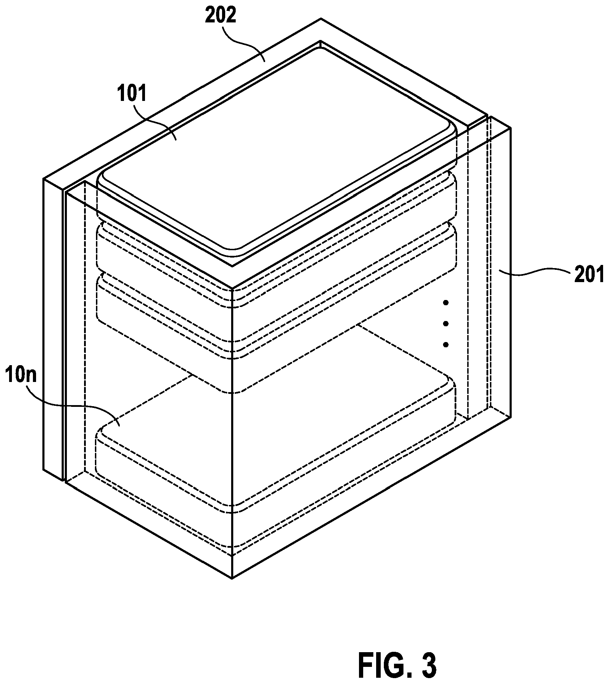

Figur 3 zeigt eine schematische dreidimensionale Darstellung mehrerer Batteriezellen 101, 102, 103, ... 10n mit zwei Spannplatten 201, 202: eine erste Spannplatte 201 und eine zweite Spannplatte 202. Die zweite Spannplatte 202 ist nicht auf einen L-Profil beschränkt. In dem Fall, in dem die erste Spannplatte 201 und die zweite Spannplatte 202 beide ein L-Profil haben, umgeben die zwei Spannplatten 201, 202 die Batteriezellen 101, 102, 103, ... Die Batteriezellen 101, 102, 103, ... 10n brauchen nicht völlig umgeben zu sein. So können die Spannplatten 201, 202 beispielsweise auch nur an zwei gegenüberliegenden Seiten der Batteriezellen 101, 102, 103, ... 10n angrenzen. Die erste Spannplatte 201 und die zweite Spannplatte 202 können dadurch zumindest einen Teil eines Gehäuses des Batteriemoduls 100 bilden.

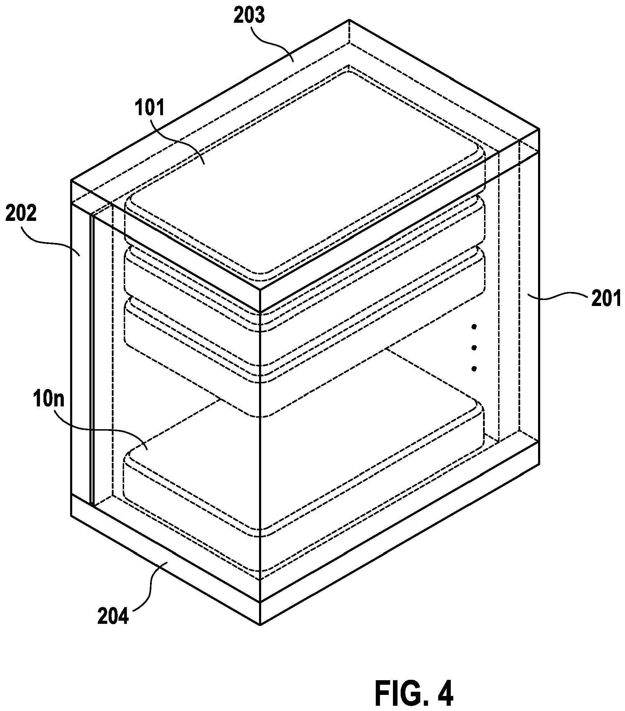

Figur 4 zeigt eine schematische dreidimensionale Darstellung mehrerer Batteriezellen 101, 102, 103, ... 10n mit den zwei Spannplatten 201, 202 und zwei Kontaktplatten 203, 204. Die zwei Kontaktplatten 203, 204 ermöglichen es, die mehreren Batteriezellen 101, 102, 103, ... 10n zweckmäßigerweise zusammen zu halten und ein dichtes Gehäuse zu bilden, welches eine verbesserte Feuchtigkeitsresistenz ermöglicht. Die Kontaktplatten 203, 204 können zum elektrischen Kontaktieren bzw. Anschließen der Batteriezellen 101, 102, 103, ... 10n elektrisch leitfähig ausgebildet sein und beispielsweise ein Metall wie Aluminium oder Kupfer umfassen. Wenn, zum Beispiel, ein direkter Kontakt mit den Batteriezellen 101, 102, 103, ... 10n erwünscht oder akzeptabel ist, kann auf die Kontaktplatten 203, 204 verzichtet werden.

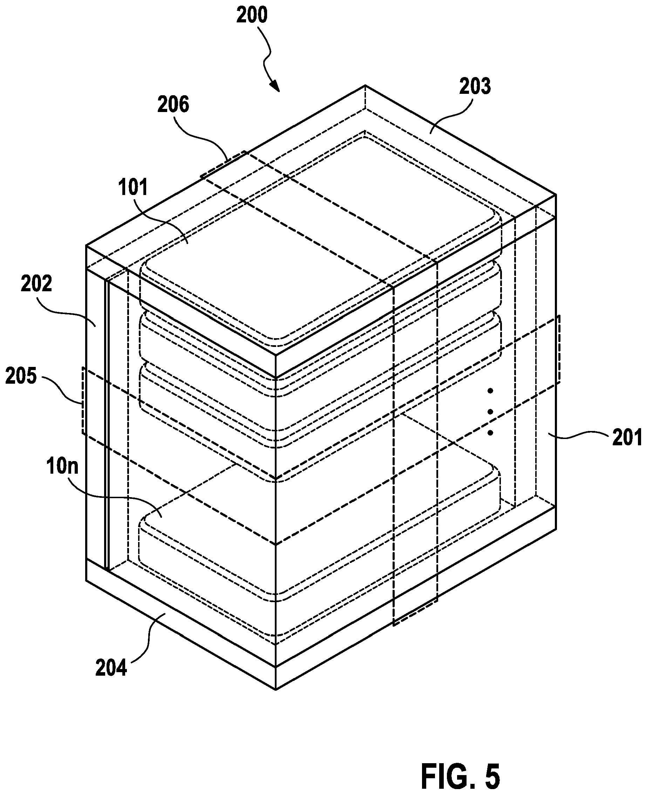

Figur 5 zeigt eine schematische dreidimensionale Darstellung einer Vorrichtung 200 zum Verspannen eines Batteriemoduls gemäß einer Ausführungsform der Erfindung. Das Batteriemodul umfasst eine Vielzahl von Batteriezellen 101, 102, 103, ... 10n. Die Vorrichtung 200 umfasst eine erste Spannplatte 201 und eine zweite Spannplatte 202 zum Positionieren der Batteriezellen 101, 102, 103, ... 10n, einen Kühler 300 (in Figur 5 nicht dargestellt), der zwischen den Batteriezellen 101, 102, 103, ... 10n und der ersten Spannplatte 201 und / oder zweiten Spannplatte 202 angeordnet ist, und eine Verspanneinrichtung 205, 206 oder mehrere Verspanneinrichtungen, die derart konfiguriert ist/ sind, die Spannplatten 201, 202 und die Batteriezellen 101, 102, 103, ... 10n gegeneinander zu verspannen.

Die Verspanneinrichtung 205, 206 können beispielsweise als Band wie Klebeband, Kunststoffband oder Metallband, Verschraubung wie Schraube oder Verschweißung wie Schweißpunkte oder Schweißnähte verwirklicht sein.

Der Kühler 300 (in Figur 5 nicht dargestellt) ist zwischen der Spannplatte 201, 202 und den Batteriezellen 101, 102, 103, ... 10n vorgesehen, sodass die Verspannungseinrichtung 205, 206 den Kühler 300 zwischen der Spannplatte 201, 202 und den Batteriezellen 101, 102, 103, ... 10n fixieren kann. Dadurch wird der Kühler 300 in direktem Kontakt mit den Außenflächen der Batteriezellen 101, 102, 103, ... 10n gebraucht, sodass die Wirksamkeit des Kühlers 300 verbessert oder optimiert werden kann.

Ein entsprechendes Verfahren zum Verspannen des Batteriemoduls 100 kann die folgende Schritte umfassen: ein Positionieren der Batteriezellen 101, 102, 103, ... 10n mit der Spannplatte 201, 202 und ein Verspannen der Spannplatte 201, 202 und der Batteriezellen 101, 102, 103, ... 10n gegeneinander mit der Verspanneinrichtung 205, 206. In dieser Ausführungsform ist die erste Spannplatte 201, 202 mit dem Kühler 300 vorgesehen, sodass das Verspannen der Spannplatte 201, 202 den Kühler im Kontakt mit den Batteriezellen 101, 102, 103, ... 10n bringt.

In einer anderen Ausführungsform der Erfindung kann den Kühler 300 nach dem Verspannen der Spannplatte 201, 202 zwischen der Spannplatte 201, 202 und den Batteriezellen 101, 102, 103, ... 10n eingeführt werden. In einer Variante dieser anderen Ausführungsform kann der Kühler 300 zwischen der Spannplatte 201, 202 und den Batteriezellen 101, 102, 103, ... 10n eingeführt bzw. eingepresst werden. In einer zweiten Variante dieser anderen Ausführungsform kann den Kühler 300 zwischen der Spannplatte 201, 202 und den Batteriezellen 101-10n durch ein Streckblas-Verfahren hergestellt werden.

Ein entsprechendes Verfahren zum Verspannen des Batteriemoduls 100 kann die folgende Schritte umfassen: ein Positionieren der Batteriezellen 101, 102, 103, ... 10n mit der Spannplatte 201, 202, ein Einführen des Kühlers 300 zwischen der ersten Spannplatte 201, 202 und den Batteriezellen 101, 102, 103, ... 10n, und ein Verspannen der Spannplatte 201, 202 und der Batteriezellen 101, 102, 103, ... 10n gegeneinander mit der Verspanneinrichtung 205, 206.

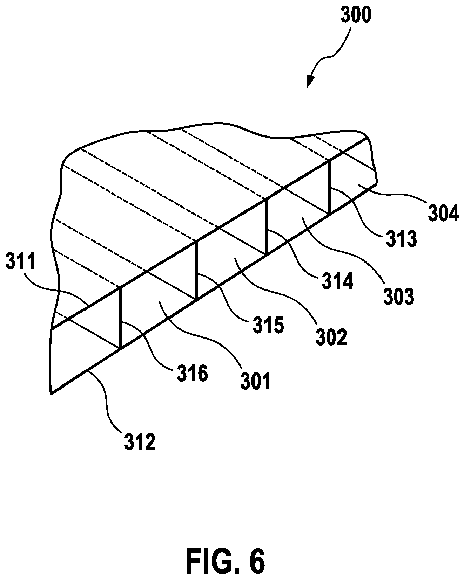

Figur 6 zeigt eine schematische dreidimensionale Darstellung eines Kühlers 300.

Der Kühler 300 kann als ein Hohlprofil verwirklicht werden bzw. sein. Der Kühler 300 kann eine Vielzahl von Hohlräumen 301-304, die durch Wände 311, ... 316 definiert sind und durch die ein Temperiermittel wie Kühlmittel fließen kann, umfassen.

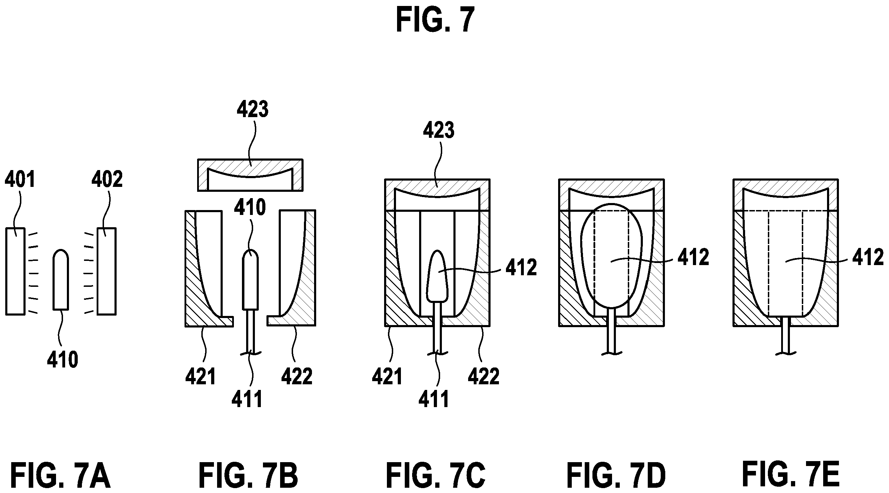

Der Kühler 300 kann, zum Beispiel, mittels eines Streckblas-Verfahrens, das im Folgenden mit Bezug auf die Figuren 7A-7E beschrieben wird, hergestellt werden. Die Hohlräume 301, ... 304 können mittels einer Vielzahl von nebeneinander platzierten Vorformlingen 410 erhalten werden.

Figuren 7A-7E zeigen eine schematische zweidimensionale Darstellung des Streckblas-Verfahrens zum Herstellen zumindest eines Teils des Kühlers 300 gemäß der anderen Ausführungsform der Erfindung.

Beim Herstellen von Hohlkörpern im Streckblas-Verfahren wird, wie in Figur 7A dargestellt, ein Vorformling 410 aus Kunststoff in einem ersten Verfahrensschritt in einer Heizvorrichtung 401, 402 wie einem Heizofen oder einer Heizlampe auf eine Verarbeitungstemperatur von, zum Beispiel, 90 °C bis 120 °C temperiert, sodass sich die Viskosität des Kunststoffs verringert. Durch die veränderte Viskosität des Kunststoffs wird die Ausformbarkeit des Vorformlings 410 im zweiten Arbeitsgang, dem in Figuren 7B-7E dargestellten Streckblasen, ermöglicht.

Im zweiten Verfahrensschritt findet, wie in Figuren 7B-7E dargestellt, der Ausformprozess eines Hohlraums 412 statt. Dazu wird der temperierte Vorformling 410 an die Blasformen 421, 422, 423 übergeben. In dieser Ausführungsform können die Batteriezellen 101, 102, 103, ... 10n als Blasform 421, die Spannplatte 201, 202 als Blasform 422 und die Kontaktplatten 203, 204 als Blasform 423 dienen bzw. angesehen werden.

Die Blasformen 421, 422, 423 werden, wie in Figur 7B dargestellt, mit dem vortemperierten Vorformling 410 bestückt und verschlossen. Anschließend erfolgt, wie in Figuren 7C und 7D dargestellt, die Druckausformung. Dabei wird in den temperierten Vorformling 410 ein Gas wie Luft geblasen, sodass sich der gasgefüllte Hohlraum 412 ausbilden kann, wodurch das Material des Vorformlings 410 an die Wände der Blasformen 421, 422, 423 gepresst wird und dort, wie in Figur 7E dargestellt, die endgültigen Konturen erhält.

Dadurch ist es möglich, eine ideale Anpassung des Kühlers 300, der einen oder mehreren Vorformlinge 410 umfasst, und die Kontur der Batteriezellen 101-10n zu ermöglichen. Außerdem ist es möglich, eine Vorspannung zwischen den Batteriezellen 101-10n und der Spannplatte 201, 202 durch den Kühler zu erreichen, welche die Bewegung der Batteriezellen 101-10n verhindert.

Abschließend wird angemerkt, dass Ausdrücke wie "umfassend" und "aufweisend" oder dergleichen nicht ausschließen, dass weitere Elemente oder Schritte vorgesehen sein können. Die verwendeten Anzahlen sind lediglich beispielhaft, sodass eine Vielzahl zwei, vier, fünf, sechs, oder mehr Elemente oder Schritte umfassen kann. Weiterhin wird darauf hingewiesen, dass Artikel wie "ein" oder "eine" keine Vielzahl ausschließen. Weiterhin wird angemerkt, dass Zahlwörter bzw. Ordnungszahlen wie "erste", "zweite" usw. ausschließlich zur Unterscheidung von Elementen und Schritten dienen, ohne dabei eine Reihenfolge der Anordnung der Elemente oder der Ausführung der Schritte festzulegen bzw. zu beschränken. Außerdem können die in Verbindung mit den verschiedenen Ausführungsformen beschriebenen Merkmale beliebig miteinander kombiniert werden. Schließlich wird angemerkt, dass die Bezugszeichen in den Ansprüchen nicht als den Schutzbereich der Ansprüche beschränkend ausgelegt werden sollen.

## Patentansprüche

1. Vorrichtung (200) zum Verspannen eines Batteriemoduls (100), das eine Vielzahl von Batteriezellen (101, ... 10n) umfasst, **gekennzeichnet durch**:
- eine erste Spannplatte (201) zum Positionieren der Batteriezellen (101, ... 10n),
- einen Kühler (300), der zwischen der ersten Spannplatte (201) und den Batteriezellen (101, ... 10n) ist, und
- eine Verspanneinrichtung (205, 206), die derart konfiguriert ist, die erste Spannplatte (201, 202) und die Batteriezellen (101, ... 10n) gegeneinander zu verspannen, **dadurch gekennzeichnet, dass** die erste Spannplatte L-förmig ausgebildet ist.

2. Die Vorrichtung (200) nach Anspruch 1, weiterhin umfassend:
- eine zweite Spannplatte (202),
- wobei die Verspanneinrichtung (205, 206) weiterhin derart konfiguriert ist, die Batteriezellen (101, ... 10n) zwischen der ersten Spannplatte (201) und der zweiten Spannplatte (202) zu verspannen.

3. Die Vorrichtung (200) nach Anspruch 2, wobei:
- die erste Spannplatte (201) und die zweite Spannplatte (202) derart konfiguriert sind, einen Teil eines Gehäuses des Batteriemoduls (100) zu bilden.

4. Die Vorrichtung (200) nach einem der vorhergehenden Ansprüche, wobei:
- der Kühler (300) als ein Hohlprofil ausgebildet ist.

5. Die Vorrichtung (200) nach einem der vorhergehenden Ansprüche, wobei:
- die Verspanneinrichtung (205, 206) als ein Klebeband mehrere Klebebänder, eine Schraube, mehrere Schrauben, eine Verschweißung oder mehrere Verschweißungen ausgebildet ist.

6. Batteriesystem, umfassend:
- das Batteriemodul (100), und
- die Vorrichtung (200) nach einem der vorhergehenden Ansprüche.

7. Fahrzeug, umfassend:
- das Batteriesystem nach Anspruch 6.

8. Verfahren zum Verspannen eines Batteriemoduls (100), das eine Vielzahl von Batteriezellen (101, ... 10n) umfasst, **gekennzeichnet durch**:
- Positionieren der Batteriezellen (101, ... 10n) mit einer ersten Spannplatte (201), welche L-förmig ausgebildet ist,
- Einführen eines Kühlers (300) zwischen die erste Spannplatte (201) und die Batteriezellen (101, ... 10n), und
- Verspannen der ersten Spannplatte (201) und der Batteriezellen (101, ... 10n) gegeneinander mit einer Verspanneinrichtung (205, 206).

9. Verfahren zum Verspannen eines Batteriemoduls (100), das eine Vielzahl von Batteriezellen (101, ... 10n) umfasst, **gekennzeichnet durch**:
- Positionieren der Batteriezellen (101, ... 10n) mit einer ersten Spannplatte (201), welche L-förmig ausgebildet ist, und
- Verspannen der ersten Spannplatte (201) und der Batteriezellen (101, ... 10n) gegeneinander mit einer Verspanneinrichtung (205, 206), wobei
- die erste Spannplatte (201) einen Kühler (300) umfasst.

10. Das Verfahren nach Anspruch 8 oder 9, wobei:
- der Kühler (300) durch ein Streckblas-Verfahren ausgebildet wird.

11. Das Verfahren nach Anspruch 10, wobei:
- der Kühler (300) in dem Batteriemodul (100) ausgebildet wird.

## Claims

1. Device (200) for bracing a battery module (100) which comprises a multiplicity of battery cells (101, ... 10n), **characterized by**:
- a first clamping plate (201) for the positioning of the battery cells (101, ... 10n),
- a cooler (300) which is between the first clamping plate (201) and the battery cells (101, ... 10n), and
- a bracing means (205, 206) which is configured so as to brace the first clamping plate (201, 202) and the battery cells (101, ... 10n) against one another, **characterized in that** the first clamping plate is of L-shaped form.

2. Device (200) according to Claim 1, furthermore comprising:
- a second clamping plate (202),
- wherein the bracing means (205, 206) is furthermore configured to brace the battery cells (101, ... 10n) between the first clamping plate (201) and the second clamping plate (202).

3. Device (200) according to Claim 2, wherein:
- the first clamping plate (201) and the second clamping plate (202) are configured so as to form a part of a housing of the battery module (100).

4. Device (200) according to one of the preceding claims, wherein:
- the cooler (300) is in the form of a hollow profile.

5. Device (200) according to one of the preceding claims, wherein:
- the bracing means (205, 206) is in the form of an adhesive strip, multiple adhesive strips, a screw, multiple screws, a welded connection or multiple welded connections.

6. Battery system, comprising:
- the battery module (100), and
- the device (200) according to one of the preceding claims.

7. Vehicle, comprising:
- the battery system according to Claim 6.

8. Method for bracing a battery module (100) which comprises a multiplicity of battery cells (101, ... 10n), **characterized by**:
- positioning the battery cells (101, ... 10n) with a first clamping plate (201) which is of L-shaped form,
- inserting a cooler (300) between the first clamping plate (201) and the battery cells (101, ... 10n), and
- bracing the first clamping plate (201) and the battery cells (101, ... 10n) against one another by way of a bracing means (205, 206).

9. Method for bracing a battery module (100) which comprises a multiplicity of battery cells (101, ... 10n), **characterized by**:
- positioning the battery cells (101, ... 10n) with a first clamping plate (201) which is of L-shaped form, and
- bracing the first clamping plate (201) and the battery cells (101, ... 10n) against one another by way of a bracing means (205, 206), wherein
- the first clamping plate (201) comprises a cooler (300).

10. Method according to Claim 8 or 9, wherein:
- the cooler (300) is formed by way of a stretch blow molding process.

11. Method according to Claim 10, wherein:
- the cooler (300) is formed in the battery module (100).

## Revendications

1. Dispositif (200) de serrage d'un module de batterie (100) qui comporte plusieurs cellules de batterie (101, ..., 10n), **caractérisé par** :
une première plaque de serrage (201) servant à positionner les cellules de batterie (101, ..., 10n),
un refroidisseur (300) disposé entre la première plaque de serrage (201) et les cellules de batterie (101, ..., 10n) et
un dispositif de serrage (205, 206) configuré de manière à serrer les unes contre les autres la première plaque de serrage (201, 202) et les cellules de batterie (101, ..., 10n),
**caractérisé en ce que**
la première plaque de serrage est configurée en forme de L.

2. Ensemble (200) selon la revendication 1, comprenant en outre une deuxième plaque de serrage (202), le dispositif de serrage (205, 206) étant en outre configuré de manière à serrer les cellules de batterie (101, ..., 10n) entre la première plaque de serrage (201) et la deuxième plaque de serrage (202).

3. Ensemble (200) selon la revendication 2, dans lequel la première plaque de serrage (201) et la deuxième plaque de serrage (202) sont configurées de manière à former une partie du boîtier du module de batterie (100).

4. Ensemble (200) selon l'une des revendications précédentes, dans lequel le refroidisseur (300) est configuré comme profilé creux.

5. Ensemble (200) selon l'une des revendications précédentes, dans lequel le dispositif de serrage (205, 206) est configuré comme bande adhésive, plusieurs bandes adhésives, vis, plusieurs vis, soudage ou plusieurs soudages.

6. Système de batterie comprenant :
le module de batterie (100) et l'ensemble (200) selon l'une des revendications précédentes.

7. Véhicule comportant le système de batterie selon la revendication 6.

8. Procédé de serrage d'un module de batterie (100) qui comporte plusieurs cellules de batterie (101, ..., 10n), **caractérisé par** :
le positionnement des cellules de batterie (101, ..., 10n) avec une première plaque de serrage (201) configurée en forme de L,
l'insertion d'un refroidisseur (300) entre la première plaque de serrage (201) et les cellules de batterie (101, ..., 10n) et
le serrage de la première plaque de serrage (201) et des cellules de batterie (101, ..., 10n) les unes contre les autres à l'aide d'un dispositif de serrage (205, 206).

9. Procédé de serrage d'un module de batterie (100) qui comporte plusieurs cellules de batterie (101, ..., 10n), **caractérisé par** :
le positionnement des cellules de batterie (101, ..., 10n) avec une première plaque de serrage (201) configurée en forme de L et
le serrage de la première plaque de serrage (201) et des cellules de batterie (101, ..., 10n) les unes contre les autres à l'aide d'un dispositif de serrage (205, 206), la première plaque de serrage (201) comportant un refroidisseur (300).

10. Procédé selon les revendications 8 ou 9, dans lequel le refroidisseur (300) est formé par une opération d'étirage-soufflage.

11. Procédé selon la revendication 10, dans lequel le refroidisseur (300) est formé dans le module de batterie (100).
